# EUROPEAN PATENT APPLICATION

(11) **EP 2 479 939 A1**
(43) Date of publication of application: **25.07.2012**
(21) Application number: 10816578.8
(22) Date of filing: 24.03.2010
(51) Int. Cl.: H04L 12/56, H04W 28/16

(54) **METHOD AND SYSTEM FOR PULL MODE RESOURCE AND ADMISSION CONTROL UNDER WHOLESALE SCENE**

(30) Priority: 21.09.2009 CN 200910177901
(71) Applicant: ZTE Corporation, Shenzhen, Guangdong 518057 (CN)
(72) Inventor: YOU, Jianjie, Shenzhen Guangdong 518057 (CN)
(74) Representative: Skinner, Michael Paul
(86) International application number: PCT/CN2010/071274
(87) International publication number: WO 2011/032374

(57) **Abstract**

A method for resource and admission control in the pull mode is provided, the method includes: a resource and admission control platform of the retail service provider makes a quality of service source authorisation decision on a resource request, according to the customer subscription information and policy rule of the retail service provider, after receiving the resource request sent by an application functional entity. If the resource and admission control platform of the retail service provider accepts the resource request then it sends the resource request to a resource and admission control platform of the wholesale service provider. The resource and admission control platform of the wholesale service provider performs a quality of service source authorisation decision, and sends the result of the quality of service source authorisation decision to the resource and admission control platform of the retail service provider. The resource and admission control platform of the retail service provider sends the received result of the quality of service source authorisation decision to the application function entity. Also, a system for resource and admission control in the pull mode is provided. The method and the system solves the problem that the resource and admission control mode in the pull mode is not completed in the prior art.

## Description

### Technical Field

The present invention relates to the communication field, and in particular, to a method and system for resource and admission control in a pull mode under a wholesale scenario.

### Background of the Related Art

At present, the Next Generation Network (NGN) is a hot research topic in the current communication standard field. IP packet technique is used in the NGN as the bearer network technique, and the fixed communication and the mobile communication are converged in the NGN, so that the NGN can provide more abundant multimedia services, such as, new services with the real-time requirement (IP television, video conference, multimedia remote teach, video on demand, and so on), and these services need that the communication network should provide the supports of high efficient end to end Quality of Service (QoS), and meanwhile, the requirements for the network QoS of the user becomes higher and higher, thus providing the end to end QoS is one of the core problems of the NGN.

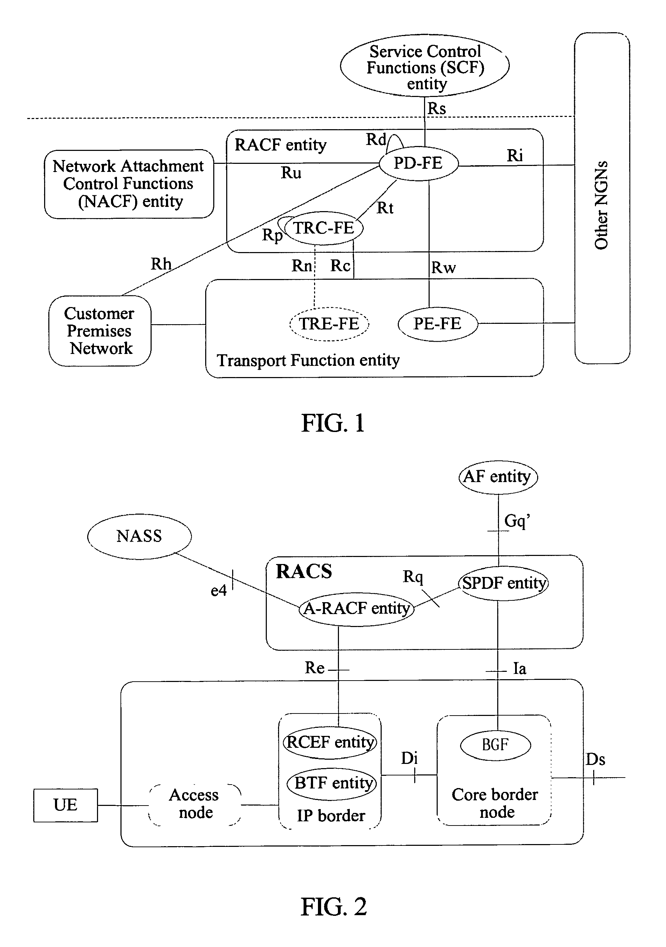

The International Telecommunication Union-Telecommunications standardization sector (ITU-T) is a telecommunication sector of the International Telecommunication Union (ITU), and it formulates the standards about the resource and admission control. In the latest Resource and Admission Control Functions (RACF) entity draft published by the ITU-T, the function framework of the RACF entity is provided. As shown in FIG. 1, the RACF entity is composed by two parts, respectively the Policy Decision Functional Entity (PD-FE) and the Transport Resource Control Functional Entity (TRC-FE). The TRC-FE interacts with the transport function through the Rc, and interacts with the Transport Resource Enforcement Functional Entity (TRE-FE) through the Rn. The PD-FE interacts with the TRC-FE through the Rt, interacts with the Customer Premises Network (CPN) through the Rh, interacts with the Policy Enforcement Functional Entity (PE-FE) through the Rw, interacts with the Service Control Functions (SCF) through the Rs, interacts with the Network Attachment Control Functions (NACF) through the Ru, and interacts with other next generation network through the Ri interface.

In addition, the PD-FE does not relate to the transport technique or the SCF. The PD-FE makes the final decision of the resource and admission control based on the network policy rule, the service information provided by the SCF, the transport layer subscription information provided by the NACF, and the resource available decision result provided by the TRC-FE.

The TRC-FE does not relate to the service but relates to the transport technique. The TRC-FE is responsible for collecting and maintaining the transport network information and resource state information. The TRC-FE enforces the resource based admission control according to the QoS, priority requirement, resource available information and transport related policy rule after receiving the resource request from the PD-FE.

The transport layer is composed by the Policy Enforcement Functional Entity (PE-FE) and the Transport Resource Enforcement Functional Entity (TRE-FE). The PE-FE enforces the policy rule sent by the PD-FE. PE-FE is a packet to packet gateway, it can be located between the CPN and the access network, or between the access network and the core network, or between networks of different operators, and is a crucial node for supporting the dynamic QoS control, port address translator control and Network Address Translator (NAT) traversing. The TRE-FE enforces the transport resource policy rule sent by the TRC-FE, and its range and function and the Rn interface require further researching and that are not within the research range at the R2 stage.

Telecommunication and Internet converged Services and Protocols for Advanced Networking (TISPAN) proposes to use the Resource and Admission Control Subsystem (RACS) to solve the problem of the QoS of the NGN bearer network. The TISPAN divides the NGN architecture into the service layer and the transport layer. The RACS and the Network Attachment SubSystem (NASS) are introduced into the transport control layer. The RACS solves the QoS problem of the NGN bearer network, and the NASS is responsible for providing the independent user access management for the upper layer service layer. The main function of the TISPAN RACS is similar to the ITU-T RACF.

The function architecture of the TISPAN RACS is as shown in FIG. 2. The RACS associates the resource requirement of the service layer with the resource allocation of the transport layer, and mainly implements functions of policy control, resource reservation, admission control, NAT traversing, and so on. RACS provides the control service of the transport layer for the service layer through a serial of QoS policies to enable the User Equipment (UE) to obtain the required QoS guarantee.

The RACS is composed by two entities, namely, the Service-based Policy Decision Function (SPDF) entity and the Access-Resource and Admission Control Function (A-RACF) entity.

### SPDF entity

The SPDF entity provides a unified interface for the application layer, shields the bottom layer network topology and the specific access type, and provides the service based policy control. The SPDF entity selects the local policy according to the request of the Application Function (AF), maps the request into the IP QoS parameter, which is sent to the A-RACF entity and the Border Gateway Function (BGF) entity so as to control the corresponding resources.

### A-RACF entity

The A-RACF entity is located in the access network, and has the functions of admission control and the network policy convergence. The A-RACF receives the request from the SPDF entity, and then implements the admission control based on the stored policy, and admits or rejects the request of the transport resources. The A-RACF entity obtains the network attachment information and the user subscription information from the NASS through the e4 interface, thereby being able to determine the available network resources according to the network location information (for example, the address of the user accessed physical node) and meanwhile, to refer to the user subscription information when processing the resource allocation request.

The transport layer includes three kinds of function entities, namely, the BGF entity, the Resource Control Enforcement Function (RCEF) entity, and the Basic Transport Function (BTF) entity.

### BGF entity

The BGF entity is a packet to packet gateway, and it can be located between the access network and the core network (implementing the core border gateway function) or between two core networks (implementing the interconnection border gateway function). The BGF entity implements the functions of the NAT traversing, gating, QoS marking, bandwidth restriction, use measurement and the resource synchronization under the control of the SPDF entity.

### RCEF entity

The RCEF entity carries out the access operator defined layer 2/layer 3 (L2/L3) media stream policy transmitted by the A-RACF entity through the Re interface, and implements the functions of gating, QoS marking bandwidth restriction and so on.

### BTF entity

The BTF entity includes two kinds of elementary transport processing functions, namely, the Elementary Forwarding Functions (EFF) entity and the Elementary Control Functions (ECF) entity.

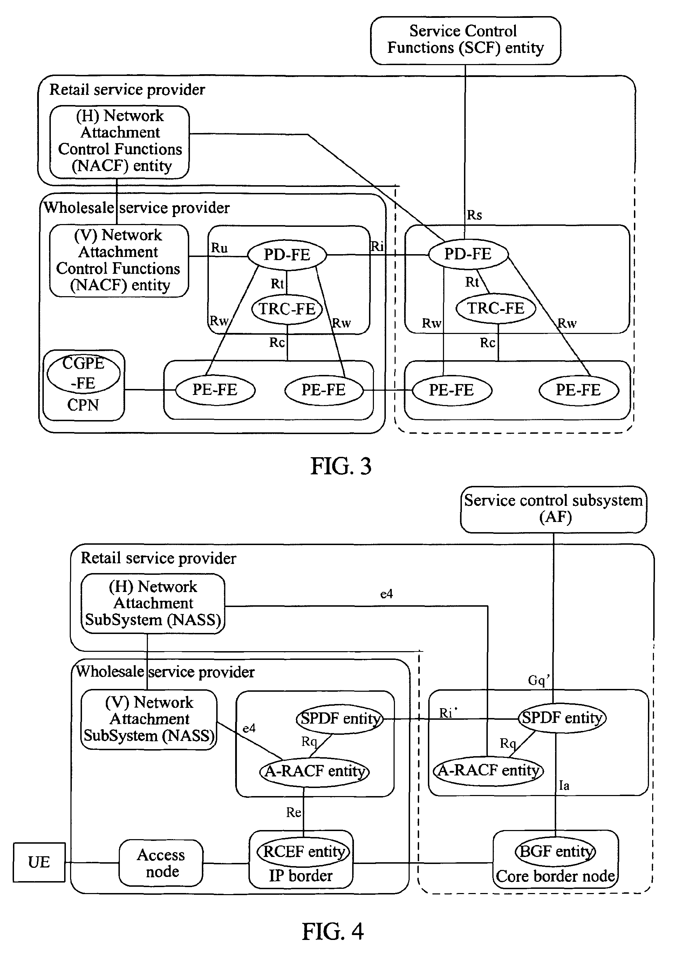

At present, in order to support the application of the Wholesale, the RACF/RACS wholesale scenario diagrams shown in FIG. 3/FIG. 4 are provided. In FIG. 3/FIG. 4, the SCF/AF belong to the NGN retail service provider (the NGN retail service provider is generally a true service provider), and the RACF/RACS in the NGN retail service provider interact with the RACF/RACS in the NGN wholesale service provider (the NGN wholesale service provider is generally the network operator) through the Ri/Ri' interface. In the wholesale scenario, the network operator takes the network level as the infrastructure to open to a plurality of service providers in the wholesale way, and this party usually does not provide service; the service providers provide various services. When the user is under this scenario, the user accesses the network of the network operator, accesses the network, and enjoys the service provided by the service provider.

In the existing wholesale scenario, it is unable to implement the resource and admission control way in the pull mode.

### Summary of the Invention

The technical problem to be solved in the present invention is to provide a method and a system for resource and admission control in a pull mode.

In order to solve the above problem, the present invention provides a method for resource and admission control in a pull mode, comprising:
after receiving a resource request sent by an application function entity, a resource and admission control platform of a retail service provider making a quality of service resource grant decision to this resource request according to user subscription information and a policy rule of the retail service provider, and if a result of the quality of service resource grant decision of the resource and admission control platform of the retail service provider is to admit the resource request, then sending the resource request to the resource and admission control platform of a wholesale service provider;
the resource and admission control platform of the wholesale service provider making a quality of service resource grant decision to this resource request, and sending a result of the quality of service resource grant decision to the resource and admission control platform of the retail service provider;
the resource and admission control platform of the retail service provider sending the received result of the quality of service resource grant decision to the application function entity,
thereby implementing resource and admission control in the pull mode under a wholesale scenario.

The method further comprising:
the resource and admission control platform is a Resource and Admission Control Function (RACF) entity, and the RACF entity includes a Policy Decision-Function Entity (PD-FE) and a Transport Resource Control-Function Entity (TRC-FE);
after the RACF entity of the wholesale service provider making the quality of service resource grant decision, and before sending the result of quality of service resource grant decision to the RACF entity of the retail service provider, the method further comprises:
the PD-FE in the RACF entity of the wholesale service provider sending grant information of a service or service stream corresponding to a resource initiation request to the TRC-FE in the RACF entity of the wholesale service provider; and the TRC-FE in the RACF entity of the wholesale service provider maintaining bundling information between the grant information and the PD-FE in the RACF entity of the wholesale service provider; and/or
the PD-FE in the RACF entity of the wholesale service provider sending the grant information of the service or service stream corresponding to the resource initiation request to a Policy Enforcement-Function Entity (PE-FE) of the wholesale service provider; the PE-FE of the wholesale service provider maintaining the bundling information between the grant information and the PD-FE in the RACF entity of the wholesale service provider.

The above method can be further characterized in that:
the resource and admission control platform is a Resource and Admission Control Function (RACF) entity;
after the RACF entity of the wholesale service provider making the quality of service resource grant decision, the method further comprises:
the RACF entity of the wholesale service provider generating a grant token for a service corresponding to the resource request, and sending the grant token and the result of the quality of service resource grant decision to the RACF entity of the retail service provider all together;
the RACF entity of the retail service provider sending the grant token and the result of the quality of service resource grant decision to the application function entity all together.

The above method can be further characterized in that:
the resource and admission control platform is a Resource and Admission Control Subsystem (RACS), and the RACS includes a Service-based Policy Decision Function (SPDF) entity and an Access-Resource and Admission Control Function (A-RACF) entity;
after the RACS of the retail service provider receiving the resource request sent by the application function entity, the method further comprises: the RACS of the retail service provider performing a quality of service resource grant check on the resource request according to user subscription information and a policy rule of the retail service provider, wherein said quality of service resource grant check comprises:
after receiving the resource request, the SPDF entity in the RACS of the retail service provider performing a grant check on the resource request according to the policy rule of the retail service provider; if the grant check is passed, then the SPDF entity in the RACS of the retail service provider sending the resource request to the A-RACF entity in the RACS of the retail service provider so as to perform the grant check based on the user subscription information; and obtaining a result of the grant check according to a resource request response returned by the A-RACF entity in the RACS of the retail service provider.

The above method can be further characterized in that:
the resource and admission control platform is a Resource and Admission Control Subsystem (RACS), and the RACS includes a Service-based Policy Decision Function (SPDF) entity and an Access-Resource and Admission Control Function (A-RACF) entity;
after the RACS of the wholesale service provider making the quality of service resource grant decision, and before sending the result of the quality of service resource grant decision to the RACS of the retail service provider, the method further comprises:
the SPDF entity in the RACS of the wholesale service provider sending grant information of a service or service stream corresponding to the resource request to the A-RACF entity in the RACS of the wholesale service provider; the A-RACF entity in the RACS of the wholesale service provider storing the grant information, and maintaining bundling information between the grant information and the SPDF entity in the RACS of the wholesale service provider.

The present invention further provides a method for resource and admission control comprising:
a terminal triggering a transport function entity of a wholesale service provider to send a resource decision request for requesting a quality of service resource to a resource and admission control platform of the wholesale service provider;
the resource and admission control platform of the wholesale service provider performing a grant check on the resource decision request, and making an admission decision according to an initial grant result, a policy rule of the wholesale service provider and a resource available check result;
if a result of the admission decision is to admit the resource decision request, then the resource and admission control platform of the wholesale service provider sending the policy rule to a transport function entity of the wholesale service provider for installing the policy,
thereby implementing the resource and admission control in the pull mode in a wholesale scenario. The above method can be further characterized in that:
before the step of admission decision, the method further comprises:
the resource and admission control platform of the retail service provider and the resource and admission control platform of the wholesale service provider making the quality of service resource grant decision to the resource request from the application function entity, and taking the obtained result of the quality of service resource grant decision as the initial grant result.

The above method can be further characterized in that:
the resource and admission control platform is a Resource and Admission Control Function (RACF) entity, and the RACF entity includes a Policy Decision-Function Entity (PD-FE) and a Transport Resource Control-Function Entity (TRC-FE);
before the step of the admission decision, the method further comprises:
the PD-FE in the RACF entity of the wholesale service provider sending the resource decision request to the TRC-FE in the RACF entity of the wholesale service provider so as to perform a resource availability check, and obtaining a result of the resource availability check according to a resource decision request response returned by the TRC-FE in the RACF entity of the wholesale service provider.

The present invention further provides a system for resource and admission control in a pull mode, comprising: a resource and admission control platform of a retail service provider and a resource and admission control platform of a wholesale service provider,
the resource and admission control platform of the retail service provider is configured to: after receiving a resource request sent by an application function entity, make a quality of service resource grant decision to this resource request according to user subscription information and a policy rule of the retail service provider, and if a result of the quality of service resource grant decision of the resource and admission control platform of the retail service provider is to admit the resource request, then send the resource request to the resource and admission control platform of a wholesale service provider;
the resource and admission control platform of the retail service provider is further configured to: send the result of the quality of service resource grant decision received from the resource and admission control platform of the wholesale service provider to the application function entity,
the resource and admission control platform of the wholesale service provider is configured to: make a quality of service resource grant decision to this resource request, and send a result of the quality of service resource grant decision to the resource and admission control platform of the retail service provider;
thereby supporting the resource and admission control in the pull mode under a wholesale scenario.

The above system can be further characterized in that:
the resource and admission control platform is a Resource and Admission Control Function (RACF) entity, and the RACF entity includes the Policy Decision-Function Entity (PD-FE) and a Transport Resource Control-Function Entity (TRC-FE),
the system further comprises a Policy Enforcement-Function Entity (PE-FE) of the wholesale service provider;
the PD-FE in the RACF entity of the wholesale service provider is configured to: send grant information of a service or service stream corresponding to a resource initiation request to the TRC-FE in the RACF entity of the wholesale service provider; and
the TRC-FE in the RACF entity of the wholesale service provider is configured to: maintain bundling information between the grant information and the PD-FE in the RACF entity of the wholesale service provider;
   and/or
the PD-FE in the RACF entity of the wholesale service provider is configured to: send the grant information of the service or service stream corresponding to the resource initiation request to a PE-FE of the wholesale service provider; and
the PE-FE of the wholesale service provider is configured to: maintain the bundling information between the grant information and the PD-FE in the RACF entity of the wholesale service provider.

The above system can be further characterized in that:
the resource and admission control platform is a Resource and Admission Control Function (RACF) entity;
the RACF entity of the wholesale service provider is further configured to: after making the quality of service resource grant decision, generate a grant token for a service corresponding to the resource request, and send the grant token and the result of the quality of service resource grant decision to the RACF entity of the retail service provider all together;
the RACF entity of the retail service provider is further configured to: send the grant token and the result of the quality of service resource grant decision to the application function entity all together.

The above system can be further characterized in that:
the resource and admission control platform is a Resource and Admission Control Subsystem (RACS), and the RACS includes a Service-based Policy Decision Function (SPDF) entity and an Access-Resource and Admission Control Function (A-RACF) entity;
the SPDF entity in the RACS of the retail service provider is configured to: after receiving the resource request, perform a grant check on the resource request according to the policy rule of the retail service provider; if the grant check is passed, then send the resource request to the A-RACF entity in the RACS of the retail service provider so as to perform the grant check based on the user subscription information; and obtain a result of the grant check according to a resource request response returned by the A-RACF entity in the RACS of the retail service provider;
the A-RACF entity in the RACS of the retail service provider is configured to: perform a grant check based on the user subscription information after receiving the resource request sent by the SPDF entity in the RACS of the retail service provider, and return the result of the grant check through the resource request response.

The above system can be further characterized in that:
the resource and admission control platform is a Resource and Admission Control Subsystem (RACS), and the RACS includes a Service-based Policy Decision Function (SPDF) entity and an Access-Resource and Admission Control Function (A-RACF) entity;
the SPDF entity in the RACS of the wholesale service provider is configured to: send grant information of a service or service stream corresponding to the resource request to the A-RACF entity in the RACS of the wholesale service provider;
the A-RACF entity in the RACS of the wholesale service provider is configured to: store the grant information, and maintain bundling information between the grant information and the SPDF entity in the RACS of the wholesale service provider. The present invention further provides a system for resource and admission control in a pull mode, comprising:
a resource and admission control platform of a wholesale service provider, configured to:
receive a resource decision request for a quality of service resource sent by a transport function entity of a wholesale service provider, wherein this resource decision request is triggered by a terminal;
perform a grant check on the resource decision request, and make an admission decision according to an initial grant result, a resource available check result, and a policy rule of the wholesale service provider; if a result of the admission decision is to admit the resource decision request, send the policy rule to a transport function entity of the wholesale service provider for installing the policy;
thereby supporting the resource and admission control in the pull mode in a wholesale scenario.

The above system can be further characterized in that:
the initial grant result is a result of the quality of service resource grant decision obtained by the resource and admission control platform of the retail service provider and the resource and admission control platform of the wholesale service provider making the quality of service resource grant decision to the resource request from the application function entity.

The above system can be further characterized in that:
the resource and admission control platform is a Resource and Admission Control Function (RACF) entity, and the RACF entity includes a Policy Decision-Function Entity (PD-FE) and a Transport Resource Control-Function Entity (TRC-FE);
the PD-FE in the RACF entity of the wholesale service provider is configured to: send the resource decision request to the TRC-FE in the RACF entity of the wholesale service provider so as to perform a resource availability check, and obtain a result of the resource availability check according to a resource decision request response returned by the TRC-FE in the RACF entity of the wholesale service provider;
the TRC-FE in the RACF entity of the wholesale service provider is configured to: perform the resource availability check when receiving the resource decision request sent by the PD-FE in the RACF entity of the wholesale service provider, and return a result of the resource availability check through the resource decision request response.

Based on the method and system of the present invention, the resource and admission control in the pull mode under the wholesale scenario is implemented.

### Brief Description of Drawings

Drawings are provided for the further understanding of the present invention, and compose a part of the specification and are used for interpreting the present invention together with the examples of the present invention, but are not for limiting the present invention. In drawings:
FIG. 1 is a schematic diagram of the function framework of the RACF entity in the related art;
FIG. 2 is a schematic diagram of the function framework of the RACS entity in the related art;
FIG. 3 is a wholesale scenario diagram of the RACF entity in the related art;
FIG. 4 is a wholesale scenario diagram of the RACS in the related art;
FIG. 5 shows the example 1 according to the present invention;
FIG. 6 shows the example 2 according to the present invention;
FIG. 7 shows the example 3 according to the present invention;
FIG. 8 shows the example 4 according to the present invention;
FIG. 9 shows the example 5 according to the present invention;
FIG. 10 shows the example 6 according to the present invention.

### Preferred Embodiments of the Present Invention

The present invention provides a method for resource and admission control in a pull mode under a wholesale scenario, and the method comprises:
after a resource and admission control platform of a retail service provider receives a resource request of an application function entity, the resource and admission control platform of the retail service provider interacting with a resource and admission control platform of a wholesale service provider, making a quality of service resource grant decision to this resource request, and sending a result of the quality of service resource grant decision to the application function entity, particularly comprising:
after receiving the resource request sent by the application function entity, the resource and admission control platform of the retail service provider making a quality of service resource grant decision according to user subscription information and a policy rule of the retail service provider, and if the result of the quality of service resource grant decision of the resource and admission control platform of the retail service provider is to admit the resource request, sending the resource request to the resource and admission control platform of the wholesale service provider;
the resource and admission control platform of the wholesale service provider making a quality of service resource grant decision to this resource request, and sending a result of the quality of service resource grant decision to the resource and admission control platform of the retail service provider;
and the resource and admission control platform of the retail service provider sending the received result of the quality of service resource grant decision to the application function entity.

The application function entity is a Service Control Function (SCF) entity or an AF (a service control subsystem or an application function) entity.

The present invention further provides a method for resource and admission control in a pull mode, comprising:
a terminal triggering a transport function entity of a wholesale service provider to send a resource decision request for requesting a quality of service resource to a resource and admission control platform of the wholesale service provider;
the resource and admission control platform of the wholesale service provider performing a grant check on the resource decision request, and making an admission decision according to an initial grant result, a resource available check result, and a policy rule of the wholesale service provider;
if a result of the admission decision is to admit the resource decision request, then the resource and admission control platform of the wholesale service provider sending the policy rule to a transport function entity of the wholesale service provider for installing the policy.

The initial grant result is a result of the quality of service resource grant decision obtained by the resource and admission control platform of the retail service provider and the resource and admission control platform of the wholesale service provider making the quality of service resource grant decision to the resource request from the application function entity.

The resource and admission control platform of the wholesale service provider also interacts with the resource and admission control platform of the retail service provider to obtain the granted service information from the resource and admission control platform of the retail service provider.

The present invention will be further described below with a method for resource and admission control under the ITU-T RACF entity architecture and the TISPAN RACS architecture.

### (1) Under the ITU-T RACH entity architecture

The RACF entity of the retail service provider and the RACF entity of the wholesale service provider interact to respectively make QoS resource grant decision to the resource initiation request, and notify the SCF entity of the result of the grant decision. The particular steps are as follows.

After receiving the resource initiation request sent by the SCF entity, the RACF entity of the retail service provider makes the QoS resource grant decision to this request according to the user subscription information and the policy rule of the retail service provider, and if the result of the QoS resource grant decision is to admit the resource initiation request, then the resource initiation request is sent to the RACF entity of the wholesale service provider;
the RACF entity of the wholesale service provider makes the QoS resource grant decision to this request according to the policy rule of the wholesale service provider, and sends the result of the QoS resource grant decision to the RACF entity of the retail service provider;
the RACF entity of the retail service provider sends the received result of the QoS resource grant decision to the SCF entity.

Furthermore, after the RACF entity of the wholesale service provider makes the QoS resource grant decision and before the RACF entity of the wholesale service provider sends the result of the QoS resource grant decision to the RACF entity of the retail service provider, following operations are further comprised:
the PD-FE in the RACF entity of the wholesale service provider sending grant information of a service or a service stream corresponding to the resource initiation request to the TRC-FE in the RACF entity of the wholesale service provider, and the TRC-FE in the RACF entity of the wholesale service provider maintaining the bundling information between the grant information and the PD-FE in the RACF entity of the wholesale service provider; and/or
the PD-FE in the RACF entity of the wholesale service provider sending grant information of a service or a service stream corresponding to the resource initiation request to the PE-FE of the wholesale service provider, and the PE-FE of the wholesale service provider maintaining the bundling information between the grant information and the PD-FE in the RACF entity of the wholesale service provider.

Furthermore, the RACF entity of the wholesale service provider further generates a grant token for the service corresponding to the resource initiation request after making the QoS resource grant decision, and sends the grant token and the result of the QoS resource grant decision to the RACF entity of the retail service provider all together;
the RACF entity of the retail service provider sends the grant token and the result of the QoS resource grant decision to the SCF entity all together;
the SCF entity sends the sends the grant token and the result of the QoS resource grant decision to the CPE through the service signaling all together.

The CPE triggers the PE-FE of the wholesale service provider to send the resource decision request for requesting the QoS resources to the RACF entity of the wholesale service provider;
the RACF entity of the wholesale service provider performs grant check on the resource decision request, and makes the admission decision according to the initiation grant result, resource available check result and the policy rule of the wholesale service provider;
if the result of the admission decision is to admit the resource decision request, then the RACF entity of the wholesale service provider sends the policy rule to the PE-FE of the wholesale service provider for policy installation.

The initiation grant result refers to the result of the QoS resource grant decision on the resource initiation request performed by the RACF of the retail service provider interacting with the RACF entity of the wholesale service provider.

The PD-FE in the RACF entity of the wholesale service provider sends the resource decision request to the TRC-FE in the RACF entity of the wholesale service provider for performing the resource available check, and obtains the result of the resource available check according to the resource decision request response returned by the TRC-FE in the RACF entity of the wholesale service provider.

Furthermore, the RACF entity of the wholesale service provider interacts with the RACF entity of the retail service provider, and obtains the granted service information from the RACF entity of the retail service provider.

### (2) Under the TISPAN RACS architecture

The RACS of the retail service provider and the RACS of the wholesale service provider interact to respectively perform QoS resource grant check to the resource request, and notify the AF entity of the result of the grant check. The particular steps are as follows.

After receiving the resource request sent by the AF entity, the RACS of the retail service provider performs the QoS resource grant check on this request according to the user subscription information and the policy rule of the retail service provider, and if the result of the QoS resource grant check is to admit the resource request, then the resource request is sent to the RACS of the wholesale service provider;
the RACS of the wholesale service provider performs the QoS resource grant check to this request according to the policy rule of the wholesale service provider, and sends the result of the QoS resource grant check to the RACS of the retail service provider;
the RACS of the retail service provider sends the received result of the QoS resource grant check to the AF entity.

In addition, after receiving the resource request sent by the AF entity, the RACS of the retail service provider performing the QoS resource grant check to this request according to the user subscription information and the policy rule of the retail service provider refers that:
the SPDF entity in the RACS of the retail service provider performs the grant check on the resource request according to the policy rule of the retail service provider after receiving this resource request; and if the grant check is passed, then the SPDF entity in the RACS of the retail service provider sends a resource request message to the A-RACF entity in the RACS of the retail service provider for performing the grant check based on the user subscription information; and obtains the result of the grant check according to the resource request response returned by the A-FACF entity in the RACS of the retail service provider.
In addition, after the RACS of the wholesale service provider performs the QoS resource grant check and before the RACS of the wholesale service provider sends the result of the QoS resource grant check to the RACS of the retail service provider, following operations are further comprised:
the SPDF entity in the RACS of the wholesale service provider sending a grant information of a service or service stream corresponding to the resource request to the A-RACF entity in the RACS of the wholesale service provider, and the A-RACF entity in the RACS of the wholesale service provider storing the grant information, and maintaining the bundling information between grant information and the SPDF entity in the RACS of the wholesale service provider.

The UE triggers the BTF entity of the wholesale service provider to send the resource request to the RAEF entity of the wholesale service provider, the RCEF entity of the wholesale service provider sends the resource request for requesting the QoS resource to the RACS of the wholesale service provider;
the RACS of the wholesale service provider performs grant check on the resource request, and makes the admission decision according to the initiation grant result, resource available check result and the policy rule of the wholesale service provider;
if the result of the admission decision is to admit the resource request, then the RACS of the wholesale service provider sends the policy rule to the RCFE entity of the wholesale service provider for policy installation.

The initiation grant result refers to the result of the QoS resource grant check performed on the resource request by the RACS of the retail service provider interacting with the RACS of the wholesale service provider to the resource request.

Furthermore, the RACS of the wholesale service provider interacts with the RACS of the retail service provider, and obtains the granted service information from the RACS of the retail service provider.

Furthermore, the present invention further provides the corresponding resource release procedure.

The present invention will be described in detail below with reference to figures and examples.

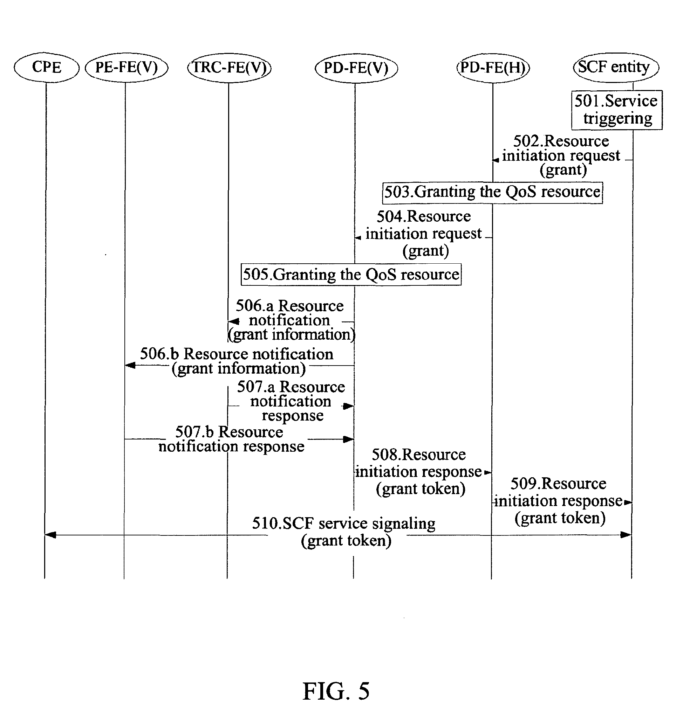

FIG. 5 is a resource pre-grant procedure initiated by the SCF entity in the control method in the pull mode under the wholesale scenario according to the example of the present invention, and this procedure comprises following steps.

In step 501, one service setup signaling message triggers the SCF entity to initiate the QoS initiation grant procedure.

In step 502, the SCF entity sends the resource initiation request message to the PD-FE (denoted as the PD-FE(H)) of the retail service provider for requesting the grant.

This resource initiation request message includes the service information, and the service information includes the service type, the priority, the bandwidth, and so on.

In step 503, the PD-FE(H) makes the QoS resource grant decision according to information of the user subscription information, the service information, and the local operator policy rule (namely the policy rule of the retail service provider); if the result of the QoS resource grant decision is to admit the resource initiation request, then the next step is performed; otherwise, the resource initiation request is rejected, and the PD-FE(H) feeds back the resource initiation response message including the reject cause to the SCF entity, and this procedure ends.

In step 504, since the PD-FE(H) does not have the requested transport layer resource, the resource initiation request message is further sent to the PD-FE (denoted as the PD-FE(V)) of the wholesale service provider after the above QoS resource grant decision is passed (namely, the decision result is to decide to admit the above resource initiation request).

In step 505, the PD-FE(V) makes the QoS resource grant decision according to information of the local operator policy rule (namely the policy rule of the wholesale service provider) and so on; optionally, the PD-FE(V) generates one grant token for the corresponding service.

In step 506a, the PD-FE(V) sends the resource notification message including the grant information to the TRC-FE(V); the TRC-FE(V) maintains the bundling relationship between the PD-FE(V) and the grant information.

The above grant information includes the information of the service or the service stream that has passed the above QoS resource grant decision. In the subsequent procedure, the TRC-FE(V) can select the correct the PD-FE(V) for the specified service or the service stream according to the above bundling relationship.

In step 507a, the TFC-FE(V) sends the resource notification response message to the PD-FE(V).

In step 506b, the PD-FE(V) sends the resource notification message including the grant information to the PE-FE(V); the PE-FE(V) maintains the bundling information of the PD-FE(V) and the grant information.

The above grant information includes the information of the service or the service stream that has passed the above QoS resource grant decision. In the subsequent procedure, the PE-FE(V) can select the correct the PD-FE(V) for the specified service or the service stream according to the above bundling information.

In step 507b, the PE-FE(V) sends the resource notification response message to the PD-FE(V).

The above steps 506a to 507a and steps 506b to 507b are all optional steps, and it can select to perform one of them, or perform both, or perform neither one, and that is to say, the TRC-FE(V) and the PE-FE(V) also can select the correct PD-FE(V) for the service or the service stream according to the statistical configuration.

In step 508, the PD-FE(V) sends the resource initiation response message including the decision result (for example, admission or rejection) of the QoS resource grant decision made in step 505 to PD-FE(H); if the grant token is generated in the step 505, then the PD-FE(V) includes the information in the resource initiation response message.

In step 509, PD-FE(H) sends the resource initiation response message including the decision result of the QoS resource grant decision made in step 505 to the SCF; in addition, if the PD-FE(H) receives the grant token from the PD-FE(V), then the PD-FE(H) includes the grant token in the resource initiation response message.

In step 510, the SCF and the CPE performs the service signaling interaction, and the SCF sends the above decision result (namely the result of the resource pre-grant) of the QoS resource grant decision; in addition, if the SCF receives the grant token from the PD-FE(H), then the SCF returns this grant token to the CPE.

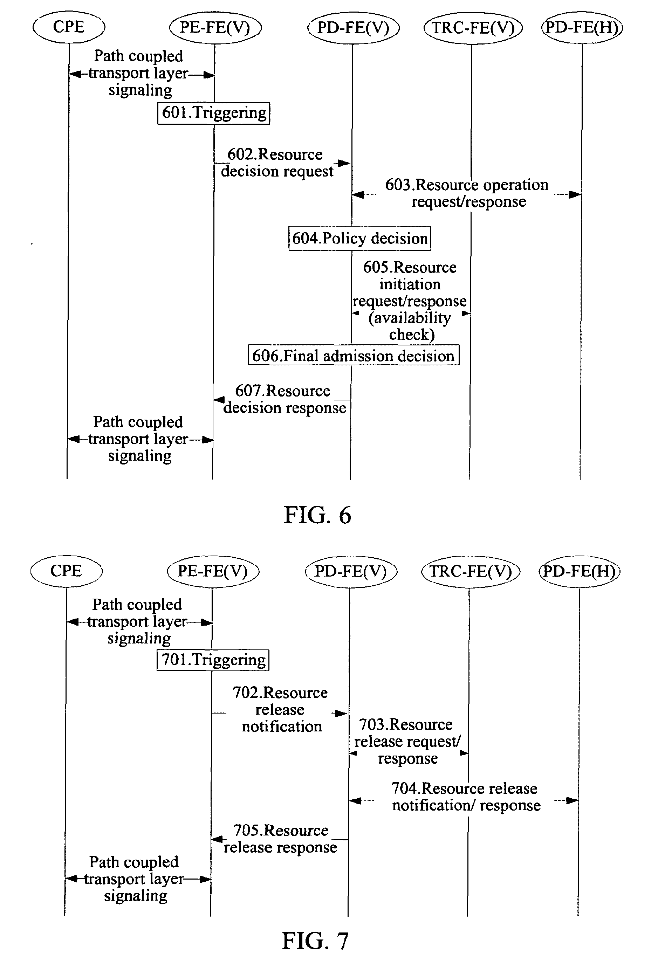

FIG. 6 is a resource request process initiated by the CPE in the control method in the pull mode under the wholesale scenario according to the example of the present invention, and the process comprises following processing.

In step 601, the CPE requests the QoS resource for the specified stream through the path coupled transport layer signaling, and this action triggers to PE-FE(V) to generate one resource decision request message.

If the QoS pre-grant has been performed for this stream previously (namely completing the resource pre-grant procedure shown in FIG. 5), and the CPE receives the grant token corresponding to this stream from the SCF, then the CPE in this step can send grant token to the PE-FE(V) through the above transport layer signaling.

In step 602, based on the QoS resource request from the CPE, the PE-FE(V) selects the correct PE-FE(V) according to the bundling information, and sends the resource decision request message carrying stream description information and the QoS parameter information to the PD-FE(V) so as to request to make the admission control decision.

The above stream description information includes information of whether this stream has passed the pre-grant.

The above bundling information can be the bundling information of the PD-FE(V) and the grant information established/maintained in step 506b or the statistically configured policy.

In step 603, after PD-FE(V) receiving the resource decision request message, if the PD-FE(H) has performed the QoS pre-grant to this stream previously, then the PD-FE(V) sends the resource operation request message to the PD-FE(H), and obtains the granted service information of this stream from the resource operation response message returned by the PD-FE(H), and notifies the PD-FE(H) that the resource decision request of this stream has been received; this step is an optional step.

In step 604, if the PD-FE(H) has performed the QoS pre-grant on this stream previously, then the PD-FE(V) makes the policy decision according to the stream description information and whether the requested QoS resource is consistent with the initial pre-grant result and the operator policy rule (namely, the policy rule of the wholesale service provider) in the PD-FE(V); if the PD-FE(H) has not performed the QoS pre-grant to this stream previously, then the PD-FE(V) makes the policy decision according to the stream description information and whether the requested QoS resource is consistent with the operator policy rule (namely, the policy rule of the wholesale service provider) in the PD-FE(V);
if the PD-FE(H) has not performed the QoS pre-grant to this stream previously, then the above service information is the statistically configured service information.

In step 605, the PD-FE(V) decides (i.e., selects) the access network and the core network related to the requested QoS resource, and then the PD-FE(V) sends the resource initiation request message (the availability check) to the corresponding TRC-FE(V) according to the above decision result so as to check the resource availability of the related network.

In step 606, the PD-FE(V) makes the final admission decision according to the results of steps 604 and 605.

In step 607, if the final admission decision result is that the resource decision request from the PE-FE(V) is admitted, then the PD-FE(V) sends the resource decision response message carrying the final admission policy rule to the PE-FE(V), the PE-FE(V) installs the policy, and replies to the CPE through the path coupled transport layer signaling.

FIG. 7 is a resource release procedure in the control method in the pull mode under the wholesale scenario according to the example of the present invention, and the procedure comprises following steps.

In step 701, the CPE releases the QoS resource of the specified stream through the path coupled transport layer signaling, and this action triggers the PE-FE(V) to generate one resource release notification message.

If the QoS pre-grant has been performed previously (namely, the resource pre-grant procedure shown in FIG. 5 has been completed) on the stream, and the CPE has received the grant token from the SCF, then the CPE can send this grant token to the PE-FE(V) through the above transport layer signaling in this step.

In step 702, based on the QoS resource release request from the CPE, the PE-FE(V) selects the correct PD-FE(V) according to the bundling information, and sends the resource release notification message to this PD-FE(V) so as to release the corresponding QoS resource.

The above bundling information might be the bundling information between the PD-FE(V) and the grant information established/maintained in step 506b, or the statistically configured policy.

In step 703, the PD-FE(V) and the TRC-FE(V) interact so as to release the resource occupied by the TRC-FE(V).

In step 704, after the PD-FE(V) releasing the resource, if the PD-FE(H) has performed the QoS pre-grant to this stream previously, then the PD-FE(V) sends the resource release notification message to the PD-FE(H), and the PD-FE(H) replies the response message; this step is an optional step.

In step 705, the PD-FE(V) sends the resource release response message to the PE-FE(V) so as to uninstall the installed policy rule thereon, and releases the corresponding QoS resource; the PE-FE(V) replies to the CPE through the path coupled transport layer signaling.

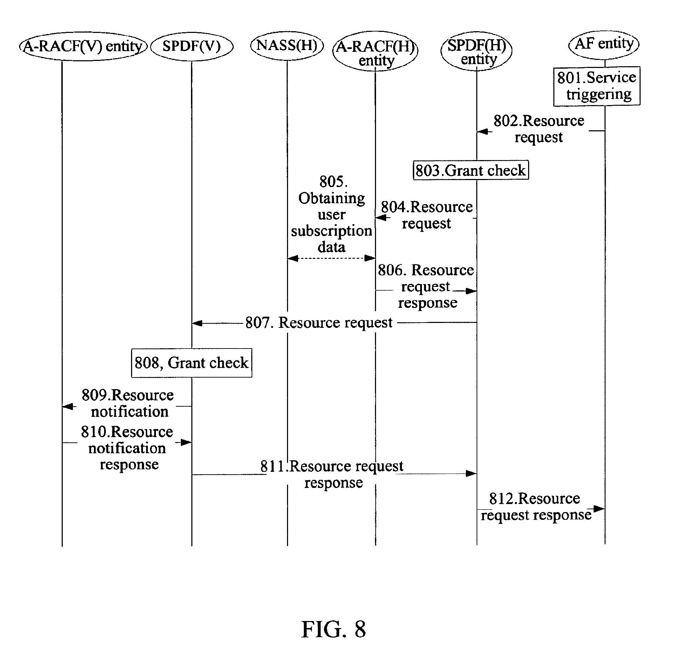

FIG. 8 is a resource pre-grant procedure initiated by the AF in the control method in the pull mode under the wholesale scenario according to the embodiment of the present invention, and this procedure comprises following steps.

In step 801, the UE initiates the service request to the AF, and triggers the AF to generate one session with respect to this service request.

In step 802, the AF sends the resource request message to the SPDF(H) so as to request the grant.

In step 803, the SPDF(H) performs the grant check to this resource request according to the local operator policy rule (i.e., the policy rule of the retail service provider) after receiving the resource request message; if the grant check is unsuccessful, the SPDF(H) sends the resource request response to the AF, and this method ends.

In step 804, if the grant check is passed, then the SPDF(H) sends the resource request message to the A-RACF(H) so as to request the grant check based on the user subscription information.

In step 805, after receiving the resource request message, if the subscription information of this user is not locally stored, the A-RACF(H) interacts with the NASS(H) to obtain the subscription information of the user.

In step 806, the A-RACF(H) performs the grant check on this resource request according to the user subscription information, and feeds back the check result to the SPDF(H).

In step 807, if the above grant check is passed, then the SPDF(H) sends the resource request message to the SPDF(V); if the above grant check is not passed, then the SPDF(H) sends the resource request response to the AF, and this method ends.

In step 808, after receiving the resource request message, the SPDF(V) performs the grant check to this resource request according to the local operator policy rule (i.e., the policy rule of the wholesale service provider); if the grant check is not passed, then the SPDF(V) sends the resource request response to the SPDF(H), and this method ends; if the grant check is passed, the next step is performed.

In step 809, the SPDF(V) sends the resource notification message carrying the grant information to the A-RACF(v); the A-RACF(V) maintains the bundling relationship between the SPDF(V) and the grant information.

The above grant information includes the information of the service or the service stream that has passed the above QoS resource grant decision.

In the subsequent procedure, the A-RACF(V) can select the correct SPDF(V) for the specified service or service stream according to the bundling relationship, which is suitable for the case that the single A-RACF connects with multiple SPDFs; if it is one to one correspondence, this step is not required. Certainly, in the case of one to multiple, it can either not perform this step but use the statistical configuration.

In step 810, the A-RACF(V) sends the resource notification response message to the SPDF(V).

In step 811, the SPDF(V) sends the resource request response to the SPDF(H).

In step 812, the SPDF(H) sends the resource request response to the AF.

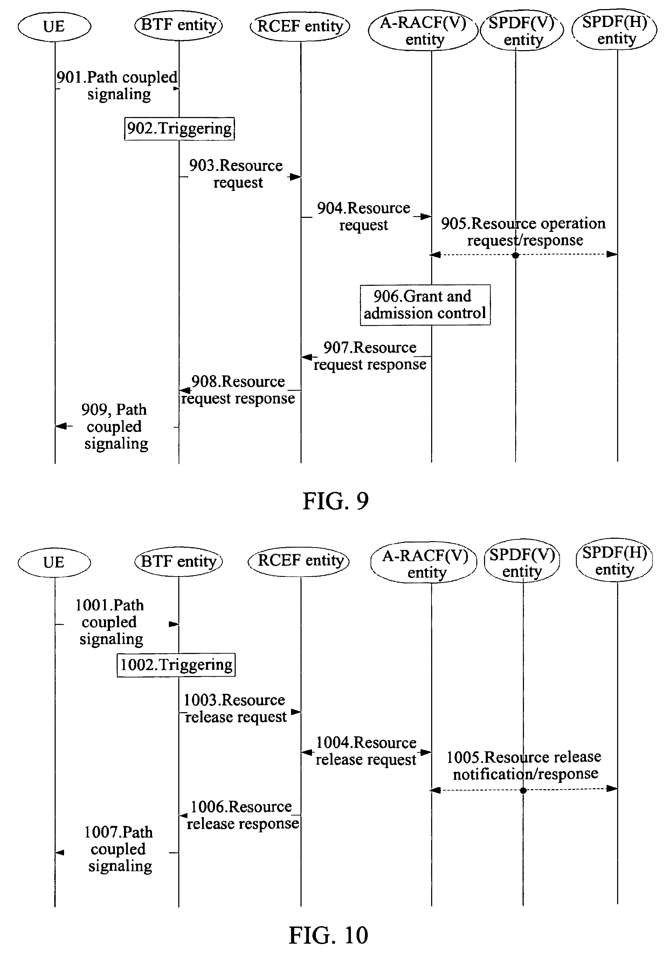

FIG. 9 is a resource request process initiated by the UE in the control method in the pull mode under the wholesale scenario according to the example of the present invention, and the process comprises following processing.

In step 901, the UE requests the resource through the path coupled transport layer signaling message from the BTF in the network of the wholesale service provider.

In step 902, the resource request initiated by the UE triggers the BTF to generate one resource request message.

In step 903, the BTF sends the resource request message to the RCEF in the network of the wholesale service provider.

In step 904, the RCEF sends the resource request message to the A-RACF(V).

The resource request message includes the stream description information and the requested QoS resource.

In step 905, after the A-RACF(V) receiving the resource request message, if the SPDF(H) has performed the QoS pre-grant to this stream previously, then the A-RACF(V) sends the resource operation request message to the SPDF(H) through the SPDF(V), and obtains the service information of this stream from the resource operation response message returned by the SPDF(H), and notifies the SPDF(H) that the resource decision request of this stream has been received; this step is an optional step.

In step 906, if the QoS pre-grant has not been performed on this stream previously or the A-RACF(V) has stored the decision required service information, then the A-RACF(V) performs the grant and admission decision according to the stream description information, requested QoS resource, service information and the resource availability, and makes the policy rule.

In step 907, after completing the resource policy decision, the A-RACF(V) sends the resource request reply message including the policy rule to the RCEF; the RCEF installs the policy according to the policy rule.

In step 908, the RCEF sends the resource request reply message to the BTF.

In step 909, the BTF is triggered, and replies to the UE through the transport layer signaling.

FIG. 10 is a resource release process in the control method in the pull mode under the wholesale scenario according to the example of the present invention, and the process comprises following processing.

In step 1001, the UE request to release the resource to the BTF in the network of the wholesale service provider through the path coupled transport layer signaling message.

In step 1002, the resource release request initiated by the UE triggers the BTF to generate one resource release request message.

In step 1003, the BTF sends the resource release request message to the RCEF in the network of the wholesale service provider.

In step 1004, the RCEF sends the resource release request message to the A-RACF(V); the A-RACF(V) sends the resource release response message to the RCEF so as to uninstall the installed policy rule thereon, and releases the corresponding QoS resource.

In step 1005, after the A-RACF(V) releasing the resource, if the SPDF(H) has performed the QoS pre-grant on this stream previously, then the A-RACF(V) sends the resource release notification message to the SPDF(H) through the SPDF (V), and the SPDF(H) replies the response message, and this step is an optional step.

In step 1006, the RCEF sends the resource release response message to the BTF.

In step 1007, the BTF replies to the UE through the path coupled transport layer signaling.

The present invention further provides a system for resource and admission control in a pull mode, and the system comprises: a resource and admission control platform of a retail service provider and a resource and admission control platform of a wholesale service provider.

The resource and admission control platform of the retail service provider is configured to: after receiving a resource request sent by an application function entity, make a quality of service resource grant decision to this resource request according to user subscription information and a policy rule of the retail service provider, and if a result of the quality of service resource grant decision of the resource and admission control platform of the retail service provider is to admit the resource request, then send the resource request to the resource and admission control platform of a wholesale service provider.

The resource and admission control platform of the retail service provider is further configured to: send the result of the quality of service resource grant decision received from the resource and admission control platform of the wholesale service provider to the application function entity.

The resource and admission control platform of the wholesale service provider is configured to: : make a quality of service resource grant decision to this resource request, and send a result of the quality of service resource grant decision to the resource and admission control platform of the retail service provider.

Thereby, the resource and admission control in the pull mode under a wholesale scenario is supported.

The resource and admission control platform is a Resource and Admission Control Function (RACF) entity, and the RACF entity includes the Policy Decision-Function Entity (PD-FE) and a Transport Resource Control-Function Entity (TRC-FE),
the system further comprises a Policy Enforcement-Function Entity (PE-FE) of the wholesale service provider;
the PD-FE in the RACF entity of the wholesale service provider is configured to: send grant information of a service or service stream corresponding to a resource initiation request to the TRC-FE in the RACF entity of the wholesale service provider; and
the TRC-FE in the RACF entity of the wholesale service provider is configured to: maintain bundling information between the grant information and the PD-FE in the RACF entity of the wholesale service provider;
and/or
the PD-FE in the RACF entity of the wholesale service provider is configured to: send the grant information of the service or service stream corresponding to the resource initiation request to a PE-FE of the wholesale service provider; and
the PE-FE of the wholesale service provider is configured to: maintain the bundling information between the grant information and the PD-FE in the RACF entity of the wholesale service provider.

The RACF entity of the wholesale service provider is further configured to: after making the quality of service resource grant decision, generate a grant token for a service corresponding to the resource request, and send the grant token and the result of the quality of service resource grant decision to the RACF entity of the retail service provider all together;
the RACF entity of the retail service provider is further configured to: send the grant token and the result of the quality of service resource grant decision to the application function entity all together.

The resource and admission control platform is a Resource and Admission Control Subsystem (RACS), and the RACS includes a Service-based Policy Decision Function (SPDF) entity and an Access-Resource and Admission Control Function (A-RACF) entity;
the SPDF entity in the RACS of the retail service provider is configured to: after receiving the resource request, perform a grant check on the resource request according to the policy rule of the retail service provider; if the grant check is passed, then send the resource request to the A-RACF entity in the RACS of the retail service provider so as to perform the grant check based on the user subscription information; and obtain a result of the grant check according to a resource request response returned by the A-RACF entity in the RACS of the retail service provider;
the A-RACF entity in the RACS of the retail service provider is configured to: perform a grant check based on the user subscription information after receiving the resource request sent by the SPDF entity in the RACS of the retail service provider, and return the result of the grant check through the resource request response.

The SPDF entity in the RACS of the wholesale service provider is configured to: send grant information of a service or service stream corresponding to the resource request to the A-RACF entity in the RACS of the wholesale service provider;
the A-RACF entity in the RACS of the wholesale service provider is configured to: store the grant information, and maintain bundling information between the grant information and the SPDF entity in the RACS of the wholesale service provider.

The present invention further provides a system for resource and admission control in a pull mode, comprising:
a resource and admission control platform of a wholesale service provider, configured to:
receive a resource decision request for a quality of service resource sent by a transport function entity of a wholesale service provider, wherein this resource decision request is triggered by a terminal;
perform a grant check on the resource decision request, and make an admission decision according to an initial grant result, a resource available check result, and a policy rule of the wholesale service provider; if a result of the admission decision is to admit the resource decision request, send the policy rule to a transport function entity of the wholesale service provider for installing the policy..

The initial grant result is a result of the quality of service resource grant decision obtained by the resource and admission control platform of the retail service provider and the resource and admission control platform of the wholesale service provider making the quality of service resource grant decision to the resource request from the application function entity.

The resource and admission control platform is a Resource and Admission Control Function (RACF) entity, and the RACF entity includes the Policy Decision-Function Entity (PD-FE) and a Transport Resource Control-Function Entity (TRC-FE).

The PD-FE in the RACF entity of the wholesale service provider is configured to: send resource decision request to the TRC-FE in the RACF entity of the wholesale service provider so as to perform the resource availability check, and obtain a result of the resource availability check according to the resource decision request returned by the TRC-FE in the RACF entity of the wholesale service provider;
the TRC-FE in the RACF entity of the wholesale service provider is configured to: perform the resource availability check when receiving the resource decision request sent by the PD-FE in the RACF entity of the wholesale service provider, and return the result of the resource availability check through the resource decision request response.

In conclusion, based on the technical scheme of the present invention, by specifying the interaction process between the wholesale service provider and the retain service provider, a method for resource and admission control in the pull mode under the wholesale scenario is provided and the problem existing in the related art is solved.

The above description is only the preferred examples, and is not intended to limit the present invention. For the person skilled in the art, the present invention can have various changes and variations. Any modifications, equivalent substitutions and improvements, and so on within the essence and principle of the present invention shall all fall into the protection scope of the present invention.

### Industrial Applicability

Based on the technical scheme of the present invention, by specifying the interaction process between the wholesale service provider and the retain service provider, a method for resource and admission control in the pull mode under the wholesale scenario is provided and the problem that the way for resource and admission control in the pull mode cannot be implemented existing in the related art is solved.

## Claims

1. A method for resource and admission control in a pull mode, comprising:
after receiving a resource request sent by an application function entity, a resource and admission control platform of a retail service provider making a quality of service resource grant decision to this resource request according to user subscription information and a policy rule of the retail service provider, and if a result of the quality of service resource grant decision of the resource and admission control platform of the retail service provider is to admit the resource request, then sending the resource request to the resource and admission control platform of a wholesale service provider;
the resource and admission control platform of the wholesale service provider making a quality of service resource grant decision to this resource request, and sending a result of the quality of service resource grant decision to the resource and admission control platform of the retail service provider;
the resource and admission control platform of the retail service provider sending the received result of the quality of service resource grant decision to the application function entity,
thereby implementing resource and admission control in the pull mode under a wholesale scenario.

2. The method of claim 1, wherein
the resource and admission control platform is a Resource and Admission Control Function (RACF) entity, and the RACF entity includes a Policy Decision-Function Entity (PD-FE) and a Transport Resource Control-Function Entity (TRC-FE);
after the RACF entity of the wholesale service provider making the quality of service resource grant decision, and before sending the result of quality of service resource grant decision to the RACF entity of the retail service provider, the method further comprises:
the PD-FE in the RACF entity of the wholesale service provider sending grant information of a service or service stream corresponding to a resource initiation request to the TRC-FE in the RACF entity of the wholesale service provider; and the TRC-FE in the RACF entity of the wholesale service provider maintaining bundling information between the grant information and the PD-FE in the RACF entity of the wholesale service provider; and/or
the PD-FE in the RACF entity of the wholesale service provider sending the grant information of the service or service stream corresponding to the resource initiation request to a Policy Enforcement-Function Entity (PE-FE) of the wholesale service provider; the PE-FE of the wholesale service provider maintaining the bundling information between the grant information and the PD-FE in the RACF entity of the wholesale service provider.

3. The method of claim 1, wherein
the resource and admission control platform is a Resource and Admission Control Function (RACF) entity;
after the RACF entity of the wholesale service provider making the quality of service resource grant decision, the method further comprises:
the RACF entity of the wholesale service provider generating a grant token for a service corresponding to the resource request, and sending the grant token and the result of the quality of service resource grant decision to the RACF entity of the retail service provider all together;
the RACF entity of the retail service provider sending the grant token and the result of the quality of service resource grant decision to the application function entity all together.

4. The method of claim 1, wherein
the resource and admission control platform is a Resource and Admission Control Subsystem (RACS), and the RACS includes a Service-based Policy Decision Function (SPDF) entity and an Access-Resource and Admission Control Function (A-RACF) entity;
after the RACS of the retail service provider receiving the resource request sent by the application function entity, the method further comprises: the RACS of the retail service provider performing a quality of service resource grant check on the resource request according to user subscription information and a policy rule of the retail service provider, wherein said quality of service resource grant check comprises:
after receiving the resource request, the SPDF entity in the RACS of the retail service provider performing a grant check on the resource request according to the policy rule of the retail service provider; if the grant check is passed, then the SPDF entity in the RACS of the retail service provider sending the resource request to the A-RACF entity in the RACS of the retail service provider so as to perform the grant check based on the user subscription information; and obtaining a result of the grant check according to a resource request response returned by the A-RACF entity in the RACS of the retail service provider.

5. The method of claim 1, wherein
the resource and admission control platform is a Resource and Admission Control Subsystem (RACS), and the RACS includes a Service-based Policy Decision Function (SPDF) entity and an Access-Resource and Admission Control Function (A-RACF) entity;
after the RACS of the wholesale service provider making the quality of service resource grant decision, and before sending the result of the quality of service resource grant decision to the RACS of the retail service provider, the method further comprises:
the SPDF entity in the RACS of the wholesale service provider sending grant information of a service or service stream corresponding to the resource request to the A-RACF entity in the RACS of the wholesale service provider; the A-RACF entity in the RACS of the wholesale service provider storing the grant information, and maintaining bundling information between the grant information and the SPDF entity in the RACS of the wholesale service provider.

6. A method for resource and admission control in a pull mode, comprising:
a terminal triggering a transport function entity of a wholesale service provider to send a resource decision request for requesting a quality of service resource to a resource and admission control platform of the wholesale service provider;
the resource and admission control platform of the wholesale service provider performing a grant check on the resource decision request, and making an admission decision according to an initial grant result, a policy rule of the wholesale service provider and a resource available check result;
if a result of the admission decision is to admit the resource decision request, then the resource and admission control platform of the wholesale service provider sending the policy rule to a transport function entity of the wholesale service provider for installing the policy,
thereby implementing the resource and admission control in the pull mode in a wholesale scenario.

7. The method of claim 6, before the step of admission decision, further comprising:
the resource and admission control platform of the retail service provider and the resource and admission control platform of the wholesale service provider making the quality of service resource grant decision to the resource request from the application function entity, and taking the obtained result of the quality of service resource grant decision as the initial grant result.

8. The method of claim 6, wherein
the resource and admission control platform is a Resource and Admission Control Function (RACF) entity, and the RACF entity includes a Policy Decision-Function Entity (PD-FE) and a Transport Resource Control-Function Entity (TRC-FE);
before the step of the admission decision, the method further comprises:
the PD-FE in the RACF entity of the wholesale service provider sending the resource decision request to the TRC-FE in the RACF entity of the wholesale service provider so as to perform a resource availability check, and obtaining a result of the resource availability check according to a resource decision request response returned by the TRC-FE in the RACF entity of the wholesale service provider.

9. A system for resource and admission control in a pull mode, wherein, the system comprises: a resource and admission control platform of a retail service provider and a resource and admission control platform of a wholesale service provider,
the resource and admission control platform of the retail service provider is configured to: after receiving a resource request sent by an application function entity, make a quality of service resource grant decision to this resource request according to user subscription information and a policy rule of the retail service provider, and if a result of the quality of service resource grant decision of the resource and admission control platform of the retail service provider is to admit the resource request, then send the resource request to the resource and admission control platform of a wholesale service provider;
the resource and admission control platform of the retail service provider is further configured to: send the result of the quality of service resource grant decision received from the resource and admission control platform of the wholesale service provider to the application function entity,
the resource and admission control platform of the wholesale service provider is configured to: make a quality of service resource grant decision to this resource request, and send a result of the quality of service resource grant decision to the resource and admission control platform of the retail service provider;
thereby supporting the resource and admission control in the pull mode under a wholesale scenario.

10. The system of claim 9, wherein
the resource and admission control platform is a Resource and Admission Control Function (RACF) entity, and the RACF entity includes the Policy Decision-Function Entity (PD-FE) and a Transport Resource Control-Function Entity (TRC-FE),
the system further comprises a Policy Enforcement-Function Entity (PE-FE) of the wholesale service provider;
the PD-FE in the RACF entity of the wholesale service provider is configured to: send grant information of a service or service stream corresponding to a resource initiation request to the TRC-FE in the RACF entity of the wholesale service provider; and
the TRC-FE in the RACF entity of the wholesale service provider is configured to: maintain bundling information between the grant information and the PD-FE in the RACF entity of the wholesale service provider;
and/or
the PD-FE in the RACF entity of the wholesale service provider is configured to: send the grant information of the service or service stream corresponding to the resource initiation request to a PE-FE of the wholesale service provider; and
the PE-FE of the wholesale service provider is configured to: maintain the bundling information between the grant information and the PD-FE in the RACF entity of the wholesale service provider.

11. The system of claim 9, wherein
the resource and admission control platform is a Resource and Admission Control Function (RACF) entity;
the RACF entity of the wholesale service provider is further configured to: after making the quality of service resource grant decision, generate a grant token for a service corresponding to the resource request, and send the grant token and the result of the quality of service resource grant decision to the RACF entity of the retail service provider all together; the RACF entity of the retail service provider is further configured to: send the grant token and the result of the quality of service resource grant decision to the application function entity all together.

12. The system of claim 9, wherein
the resource and admission control platform is a Resource and Admission Control Subsystem (RACS), and the RACS includes a Service-based Policy Decision Function (SPDF) entity and an Access-Resource and Admission Control Function (A-RACF) entity;
the SPDF entity in the RACS of the retail service provider is configured to: after receiving the resource request, perform a grant check on the resource request according to the policy rule of the retail service provider; if the grant check is passed, then send the resource request to the A-RACF entity in the RACS of the retail service provider so as to perform the grant check based on the user subscription information; and obtain a result of the grant check according to a resource request response returned by the A-RACF entity in the RACS of the retail service provider;
the A-RACF entity in the RACS of the retail service provider is configured to: perform a grant check based on the user subscription information after receiving the resource request sent by the SPDF entity in the RACS of the retail service provider, and return the result of the grant check through the resource request response.

13. The system of claim 9, wherein
the resource and admission control platform is a Resource and Admission Control Subsystem (RACS), and the RACS includes a Service-based Policy Decision Function (SPDF) entity and an Access-Resource and Admission Control Function (A-RACF) entity;
the SPDF entity in the RACS of the wholesale service provider is configured to: send grant information of a service or service stream corresponding to the resource request to the A-RACF entity in the RACS of the wholesale service provider;
the A-RACF entity in the RACS of the wholesale service provider is configured to: store the grant information, and maintain bundling information between the grant information and the SPDF entity in the RACS of the wholesale service provider.

14. A system for resource and admission control in a pull mode, comprising:
a resource and admission control platform of a wholesale service provider, configured to:
receive a resource decision request for a quality of service resource sent by a transport function entity of a wholesale service provider, wherein this resource decision request is triggered by a terminal;
perform a grant check on the resource decision request, and make an admission decision according to an initial grant result, a resource available check result, and a policy rule of the wholesale service provider; if a result of the admission decision is to admit the resource decision request, send the policy rule to a transport function entity of the wholesale service provider for installing the policy;
thereby supporting the resource and admission control in the pull mode in a wholesale scenario.

15. The system of claim 14, wherein, the initial grant result is a result of the quality of service resource grant decision obtained by the resource and admission control platform of the retail service provider and the resource and admission control platform of the wholesale service provider making the quality of service resource grant decision to the resource request from the application function entity.

16. The system of claim 14, wherein
the resource and admission control platform is a Resource and Admission Control Function (RACF) entity, and the RACF entity includes a Policy Decision-Function Entity (PD-FE) and a Transport Resource Control-Function Entity (TRC-FE);
the PD-FE in the RACF entity of the wholesale service provider is configured to: send the resource decision request to the TRC-FE in the RACF entity of the wholesale service provider so as to perform a resource availability check, and obtain a result of the resource availability check according to a resource decision request response returned by the TRC-FE in the RACF entity of the wholesale service provider;
the TRC-FE in the RACF entity of the wholesale service provider is configured to: perform the resource availability check when receiving the resource decision request sent by the PD-FE in the RACF entity of the wholesale service provider, and return a result of the resource availability check through the resource decision request response.
